# EUROPÄISCHE PATENTANMELDUNG

(11) **EP 0 987 869 A2**
(43) Veröffentlichungstag der Anmeldung: **22.03.2000**
(21) Anmeldenummer: 99115662.1
(22) Anmeldetag: 09.08.1999
(51) Int. Cl.: H04M 3/50

(54) **Vorrichtung und Verfahren zur Generierung und Verbreitung von individuellen Multimediabotschaften**

(30) Priorität: 18.09.1998 DE 19842803
(71) Anmelder: Deutsche Telekom AG, 53113 Bonn (DE)
(72) Erfinder: Fenselau, Ulrich, 53177 Bonn (DE)

(57) **Zusammenfassung**

Die Erfindung betrifft eine Vorrichtung und ein Verfahren zur Generierung und Verbreitung von individuellen Multimediabotschaften. Die Vorrichtung besteht aus einer Datenverarbeitungsanlage mit Steuer- und Bild-/Ton-Wiedergabeelementen, Netzzugang, einer Kamera sowie einem Münz- und/oder Kartenautomaten zur Abrechnung. Mit der Vorrichtung können benutzerdefinierte, d.h. vor Ort aufgezeichnete und gespeicherte, Text-, Sprach-, Ton- und/oder Videobotschaften vom Benutzer erzeugt und mit vorbestimmten Bildern, Bild- und/oder Ton-Sequenzen, Textbotschaften zu einer individuellen "Multimedia-Postkarte" kombiniert werden. Diese Nachricht wird über ein Kommunikationsnetz an eine oder mehrere vom Benutzer bestimmte Adresse oder Rufnummer übertragen. Die Kosten für die Nutzung des zur öffentlichen Nutzung gedachten Geräts werden automatisch von einen Münzguthaben eingezogen oder von einem Kartenkonto abgebucht.

## Beschreibung

### Technisches Gebiet:

Die Erfindung betrifft eine Vorrichtung sowie ein Verfahren zur Generierung und Verbreitung von individuellen Multimediabotschaften.

### Stand der Technik:

Unter Multimediabotschaft wird in diesem Zusammenhang eine Nachricht verstanden, die Elemente unterschiedlicher Nachrichtenformen, z.B. Text, Bilder, Töne enthält oder zumindest nicht auf eine dieser Nachrichtenformen festgelegt ist. Zur muldimedialen Kommunikation in diesem Sinne sind beispielsweise Bildtelefone bekannt, welche neben der gesprochenen Sprache bzw. sonstigen Tönen auch ein Bild des Benutzers aufzeichnet und in ein übertragungsfähiges Signal umwandelt, welches dem Kommunikationspartner übermittelt wird. Die Übermittlung der Sprach- und Bildsignale geschieht dabei in Echtzeit, so daß eine echte wechselseitige Kommunikation möglich ist. Weiterhin sind Videokonferenz- und Ferndiagnose-Systeme bekannt, bei welchen das Bild eines oder aller Kommunikationsteilnehmer mit einer Videokamera aufgezeichnet und über ein Telefonnetz oder über Satellit zu einem oder mehreren Kommunikationsteilnehmern übertragen und dort auf einem Monitor dargestellt wird.

Schließlich ist als Kommunikationsmethode die Kommunikation über das Internet und/oder lokale Rechnernetzwerke bekannt, welches die Übertragung von beliebigen Botschaften in digitaler Form an einen Kommunikationspartner, der ebenfalls einen adressierbaren Zugang zu dem Datennetz besitzt, ermöglicht. Eine solche Kommunikationsmethode ist beispielsweise das Versenden elektronischer Post (e-mail) also wie die Abfrage von Internet-Seiten im world-wide web. Mit e-mail können beispielsweise beliebige Dateninhalte versendet werden, sofern sie nur in eine standardisierte äußere Form gebracht sind.

Da nicht jedermann stets über die geeigneten Kommunikationsmittel für den jeweiligen Zweck verfügt, sind öffentlich aufstellbare Automaten bekannt, welche gegen Bar- oder Kreditkartenbezahlung zur Erbringung von Kommunikationsdienstleistungen zur Verfügung stehen. Beispiele dafür sind öffentliche Telefone oder Faxgeräte.

### Technische Aufgabe:

Der Erfindung liegt die Aufgabe zugrunde, derartige öffentliche Kommunikationsautomaten in der Weise weiter zu entwickeln, daß die Erstellung und Versendung von individuell gestalteten Multimediabotschaften jedermann möglich ist.

### Offenbarung der Erfindung:

Die Aufgabe wird gelöst durch eine Vorrichtung mit den Merkmalen des Anspruchs 1, welche aus den folgenden Komponenten besteht:

Als Hauptbestandteil weist die Vorrichtung eine Datenverarbeitungsanlage auf, die vorzugsweise ein handelsüblicher PC ist. Die Datenverarbeitungsanlage besitzt einen Speicher zur Speicherung von vorbestimmten und/oder vom Benutzer eingegebenen Datensätzen, die Bildern, Bild-Sequenzen, Ton-Sequenzen, Textbotschaften oder Mischformen davon entsprechen, und zur Speicherung von Steuerungsprogrammen, wie z.B. Internetprogrammen, Text- und/oder Bildverarbeitungsprogrammen und dergleichen. Die Datenverarbeitungsanlage weist weiterhin einen Prozessor auf, welcher zur Steuerung der Ein- und Ausgabe vorbestimmter oder vom Benutzer eingegebener Daten, zur Steuerung von deren Speicherung, zur Steuerung der Gestaltung individueller Multimediabotschaften aus wenigstens einem gespeicherten Datensatz sowie zur Umwandlung der Multimediabotschaft in einen über ein Kommunikationsnetz an eine vorgegebene Adresse übertragbaren Datensatz dient.

Die Vorrichtung weist weiterhin Mittel zur Generierung benutzerbestimmter Bilder, Bild-Sequenzen, Ton-Sequenzen, Textbotschaften oder Mischformen davon sowie zur Eingabe einer Adresse und gegebenenfalls Umwandlung derselben in digitale Form auf. Diese Mittel sind wenigstens eine Kamera, ein Mikrofon und eine Text-Eingabeeinheit, die Teil der Datenverarbeitungsanlage oder über eine Schnittstelle mit der Datenverarbeitungsanlage gekoppelt sind. Die Kamera ist beispielsweise eine herkömmliche Videokamera oder eine CCD-Kamera.

Die Vorrichtung besitzt weiterhin Mittel zur Ausgabe der vorbestimmten und/oder benutzerbestimmten Datensätze auf optischem und/oder akustischem Weg, darunter wenigstens einen Bildschirm und einen Lautsprecher. Diese sind Teil der Datenverarbeitungsanlage oder über eine Schnittstelle mit der Datenverarbeitungsanlage gekoppelt.

Weiterhin sind Steuerelemente vorgesehen zur Bearbeitung wenigstens eines gespeicherten Datensatzes durch den Benutzer zur Generierung einer individuellen Multimediabotschaft. Die Vorrichtung ist über eine Schnittstelle mit einem oder mehreren Kommunikationsnetzen, z.B. Internet, Telefonnetz, verbindbar bzw. im Anwendungsfall verbunden, die den Zugang der Datenverarbeitungsanlage zum Kommunikationsnetz bildet.

Wesentliches Element der Vorrichtung ist schließlich ein Münz- und/oder Kartenautomat zur Bereitstellung eines Guthabens durch den Benutzer. Der Münz- und/oder Kartenautomat ist über eine Schnittstelle mit der Datenverarbeitungsanlage gekoppelt ist, wobei Mittel zur Berechnung der Nutzungskosten und Abbuchung oder Einbehaltung dieser Kosten vom bereitgestellten Guthaben vorgesehen sind.

Weiterhin wird zur Lösung der Aufgabe ein Verfahren, insbesondere unter Verwendung einer derartigen Vorrichtung, vorgeschlagen, welches folgende Schritte enthält:
a) Ein Guthaben in Geldeinheiten wird in Form von Bargeld und/oder Guthabenkarten und/oder Kreditkarten durch den Benutzer bereitgestellt;
b) das zugeführte Guthaben wird registriert, bewertet und angezeigt oder der Benutzer zur Eingabe eines Berechtigungsnachweises aufgefordert;
c) es werden Mittel zur Generierung benutzerbestimmter Bilder, Bild-Sequenzen, Ton-Sequenzen, Textbotschaften oder Mischformen davon in Betriebsbereitschaft versetzt;
d) individuelle Bilder, Bild-Sequenzen und/oder Ton-Sequenzen werden, gesteuert durch den Benutzter, aufgezeichnet und/oder Textbotschaften vom Benutzer erstellt und diese Daten jeweils in digitaler Form gespeichert;
e) die benutzerbestimmten Daten werden unter einer graphischen Benutzeroberfläche interaktiv bearbeitet, wobei die benutzerbestimmten Daten untereinander und/oder mit vorbestimmten Daten kombiniert werden, zum Erstellen einer individuellen Multimediabotschaft, welche in digitaler Form gespeichert wird;
f) die Multimediabotschaft wird in einen über ein Kommunikationsnetz an eine vorgegebene Adresse übertragbaren Datensatz umgewandelt;
g) Nutzungsgebühren werden berechnet, der entsprechende Geldbetrag vom zugeführten Guthaben abgebucht bzw. die Kreditkarte belastet, das Restguthaben und eventuelle Karten werden zurückgegeben;
h) der Datensatz wird an die vorgegebene Adresse bzw. die vorgegebenen Adressen übertragen.

Die einzelnen Verfahrensschritte müssen dabei nicht zwingend in der angegebenen Reihenfolge durchgeführt werden.

Vorteilhafte Weiterentwicklungen der Vorrichtung bzw. des Verfahrens sind in den Unteransprüchen 2 bis 6 bzw. 8 und 9 beschrieben.

Die Komponenten der Vorrichtung sind vorzugsweise in einer Konsole integriert, die freistehend aufstellbar ist oder sich innerhalb einer Kommunikationszelle befindet. Ein derartiger Multimediaautomat eignet sich insbesondere zur Aufstellung in öffentlichen oder halb-öffentlichen Bereichen, insbesondere an Urlaubsorten, Hotels oder Orten von allgemeinem Interesse mit viel Publikumsverkehr. Zur Nutzung zahlt der Nutzer zunächst durch Einführung von Bargeld oder einer Wertkarte in den Münz- und Kartenautomat. Dann kann der Kunde mit der Kamera sich selbst oder die Umgebung sowie Sprach- und Toninformation aufnehmen. Diese Daten werden zunächst in der Vorrichtung gespeichert. Diese Aufnahmen kann der Benutzer dann mit im Speicher vorhandenen (Hintergrund-) Bild- und Tonsequenzen mischen und somit eine individuelle Botschaft erstellen. Die Botschaft kann weiterhin durch Textelemente ergänzt werden. Die individuelle Multimediabotschaft wird dann über eine Telefon- oder Datenleitung einem Empfänger zugesandt. Dieser Empfänger kann vom Nutzer durch Eingeben der Adresse bzw. Rufnummer bestimmt werden. Wahlweise ist es auch möglich, die Botschaft im Internet zu verbreiten und damit allgemein oder einem begrenzten, vom Nutzer bestimmten Empfängerkreis zugänglich zu machen. Zusätzlich werden die anzusprechenden Empfänger vorzugsweise durch eine Telefonnachricht, die parallel zur über das Internet zu übertragenden Multimedianachricht erzeugt und über das Telefonnetz übertragen wird, von der aufgelaufenen bzw. zu erwartenden Multimedianachricht informiert.

Mit der erfindungsgemäßen Vorrichtung wird es möglich, individuelle Bild- und Toninformationen, die mit vorbestimmten Bild- und/oder Tonsequenzen und/oder vorbestimmten oder individuellen Texten kombiniert sein können zu einer individuellen "Multimedia-Postkarte" zu kombinieren und diese als schnelles, individuelles und aussagekräftiges Kommunikationsmittel an einen oder mehrere ausgewählte Empfänger zu übermitteln. Durch die Übertragung im Internet oder über ein sonstiges Daten-Kommunikationsnetz findet die Übertragung der Urlaubsgrüße schnell, unmittelbar und ohne Qualitätsverlust statt. Im Gegensatz zum Bildtelefon muß der Empfänger der Multimedianachricht bei Ankunft der Nachricht nicht anwesend sein, sondern es muß lediglich eine entsprechende Empfangseinrichtung aktiviert oder von der ankommenden Nachricht aktivierbar sein. Weiterhin von Vorteil ist, daß die Multimedianachricht beim Empfänger gespeichert und jederzeit wieder abgerufen werden kann.

Die Erfindung wird nachfolgend an einem Ausführungsbeispiel erläutert.

### Kurzbeschreibung der Zeichnung, wobei zeigen:

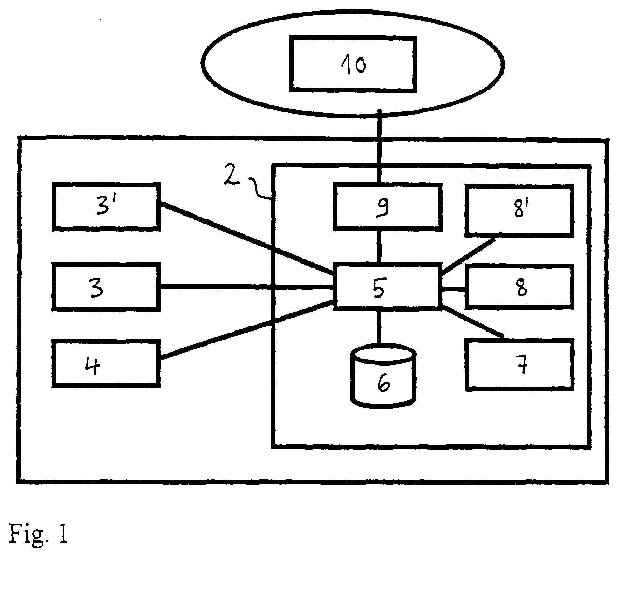

- Figur 1: ein prinzipielles Blockschaltbild einer erfindungsgemäßen Vorrichtung.

Der Automat 1 zur Generierung von Multimediabotschaften ist im hier beschriebenen Ausführungsbeispiel aus handelsüblichen Komponenten zusammengestellt. Diese sind mit bekannten Schnittstellen verknüpft, die Datenübertragung zwischen den einzelnen Komponenten erfolgt über bekannte Datenübertragungsprotokolle.

Der Automat 1 weist als Hauptbestandteil eine Datenverarbeitungsanlage 2 auf, die beispielsweise ein Standard-PC ist. Hauptbestandteil der Datenverarbeitungsanlage 2 sind als Zentraleinheit ein Prozessor 5 sowie ein Speicher 6. Der Prozessor 5 dient als Zentraleinheit zur Steuerung sämtlicher Funktionen der Datenverarbeitungsanlage, im Zusammenhang mit der Erfindung insbesondere zur Steuerung der Ein- und Ausgabe vorbestimmter oder vom Benutzer eingegebene Daten, zur Steuerung von deren Speicherung, zur Steuerung der Gestaltung individueller Multimediabotschaften aus den gespeicherten Daten durch den Benutzer sowie zur Umwandlung der Multimediabotschaft in einen über ein Kommunikationsnetz 10 an eine vorgegebene Adresse übertragbaren Datennetz.

Um diese Funktionen erfüllen zu können, sind geeignete Multimedia- sowie Kommunikationsprogramme vorhanden. Diese Programme sind im Speicher 6 abgelegt und werden in bekannter Weise von der Datenverarbeitungsanlage abgerufen und aktiviert.

Neben des Datenverarbeitungsprogrammen sind im Speicher 6 in dafür vorgesehenen Speicherbereichen vorbestimmte und/oder vom Benutzer eingegebene Datensätze gespeichert, die Bildern, Bild-Sequenzen, Ton-Sequenzen, Text-Botschaften oder auch Mischformen davon entsprechen.

Die Datenverarbeitungsanlage 2 weist als Zubehörteile weiterhin Steuerelemente 7 auf, die zur Eingabe von Steuerbefehlen zur Gestaltung der Multimediabotschaft bzw. zur Steuerung der allgemeinen Funktionen der Datenverarbeitungsanlage dienen. Das Steuerelement 7 kann eine Text- Ein- und Ausgabeeinheit sein, also z.B. eine Tastatur, an welcher Textbotschaften zur Ergänzung der Multimediabotschaft eingegeben werden können. Weiterhin kommen als Steuerelemente 7 eine Maus, ein Trackball oder berührungssensitive Elemente, z.B. ein Touchpanel oder ein berührungssensitiver Bildschirm in Frage.

Mittels einer Ausgabeeinheit 8, die ebenfalls Teil der Datenverarbeitungsanlage 2 und mit dem Prozessor 5 gekoppelt ist, kann sich der Benutzer verschiedene Datensätze optisch und/oder akustisch anzeigen bzw. wiedergeben lassen. Die Ausgabeeinheit 8 ist ein Bildschirm bzw. Monitor, vorzugsweise kombiniert mit einem Lautsprecher 8' zur Ausgabe von Tonsignalen. Mit Hilfe des Monitors wird der Benutzer unter einer grafischen Benutzeroberfläche auch zur Bedienung des Automaten und Eingabe entsprechender Steuerbefehle angeleitet. Weiterhin ist es vorteilhaft, wenn der Bildschirm eine berührungssensitiver Bildschirm ist, so daß das Steuerelement 7 und Ausgabeelement 8 in einem Bauteil integriert ist. Dies reduziert die Anzahl der Komponenten der erfindungsgemäßen Vorrichtung 1 und trägt zur Benutzerfreundlichkeit sowie zur Zerstörungssicherheit bei.

Die erfindungsgemäße Vorrichtung 1 weist zudem eine Kamera 3 und ein Mikrofon 3' auf, welche über eine Standardschnittstelle mit der Datenverarbeitungsanlage 2 bzw. ihrer Zentraleinheit 5 verbunden sind. Eine solche Standardschnittstelle ist beispielsweise die PCI-Schnittstelle. Bei der Kamera 3 handelt es sich um eine handelsübliche Videokamera oder CCD-Kamera. Die von der Kamera 3 aufgezeichneten Bild- bzw. Bild-Ton-Sequenzen werden in digitaler Form im Speicher 6 der Datenverarbeitungsanlage 2 hinterlegt. Die Kamera ist vorzugsweise über ein Kabel mit der Datenverarbeitungsanlage verbunden und an definierter Position relativ zu dieser im Raum aufgestellt, z.B. auf einem Stativ oder in der Wand einer Kommunikationszelle. Dabei ist sie vorzugsweise in gewissem Maße beweglich, so daß der Benutzer sich selbst oder Dritte vor einem in Grenzen variablen Hintergrund aufnehmen kann. Aus Gründen der Verkehrssicherheit, einfacheren technischen Handhabbarkeit und Diebstahlsicherheit kann es auch vorteilhaft sein, wenn die Kamera 3 und das Mikrofon 3' direkt in eine Konsole integriert sind, innerhalb welcher sich auch die übrigen Komponenten der Vorrichtung befinden.

Die Vorrichtung 1 weist als weiteres wesentliches Element einen Münz- und Kartenautomaten 4 auf, der über eine Standardschnittstelle mit der Datenverarbeitungsanlage 2 verbunden ist. Diese Schnittstelle ist beispielsweise ebenfalls eine PCI-Schnittstelle. Der Münz- und Kartenautomat 4 dient zur Bereitstellung eines Guthabens durch Zufuhr von Münzen bzw. Guthaben- oder Kreditkarten. Zu Beginn der Nutzung des Automaten 1 kann der Kunde entscheiden, ob er mit Bargeld oder mit Scheck- oder Kreditkarte zahlen will. Entscheidet sich der Kunde für Barzahlung, so wirft er zunächst einen ausreichenden Betrag in Form von Münzen oder Geldscheinen in den Münz- und Kartenautomaten 4 ein. Der Automat registriert und bewertet den zugefügten Betrag und zeigt ihn als Guthaben am Bildschirm 8 an. Das Entgelt für die Leistung des Automaten ergibt sich beispielsweise aus einer Einmalgebühr für die Benutzung und einer zusätzlichen zeit- und volumenabhängigen Gebühr. Die Beträge dieser einzelnen Entgeltbestandteile können vom Betreiber frei ausgewählt werden und z.B. auch zu Null gesetzt werden. Die Entgelte werden während oder nach Beendigung der Nutzung vom Guthaben abgezogen und einbehalten. Ein Restbetrag wird zurückgegeben. Entscheidet sich der Kunde für die Bezahlung mit einer Guthabenkarte, so führt er zunächst diese Karte in einen dafür vorgesehenen Kartenschlitz des Kartenautomaten ein. Die Komponente 4 prüft, ggf. unter Beteiligung der Datenverarbeitungsanlage 2, zunächst die Bonität. Nach der Nutzung wird das angefallene Entgelt vom Kartenkonto abgebucht und die Karte ausgeworfen.

Die Vorrichtung 1 weist weiterhin eine Schnittstelle 9 zur Anbindung an ein Telefonnetz oder ein sonstiges Kommunikationsnetz auf Diese Schnittstelle 9 ist eine analoge oder digitale Schnittstelle. Bei analogem Anschluß wird die Datenverarbeitungsanlage über ein Modem, bei digitalem Anschluß über ein ISDN-Interface mit dem Telefonnetz oder dem Internet verbunden. Über einen Internet-Service-Provider (ISP) kann der Zugang zum Internet hergestellt werden.

Die Botschaft kann dabei direkt an den Empfänger übermittelt werden. Wird eine Zwischenspeicherung erforderlich, z.B. weil der Empfänger nicht in Echtzeit erreichbar ist oder weil zeitversetzt an mehrere Empfänger übermittelt werden soll oder weil ohnehin eine Speicherung erwünscht ist, um den Empfänger den individuellen Abruf der Botschaft zu ermöglichen, so erfolgt die Speicherung in digitaler Form auf Festplatten oder anderen dauerhaften Speichermedien, z.B. auch in der Domain eines ISP.

### Gewerbliche Anwendbarkeit:

Die Erfindung ist insbesondere von Anbietern von Telekommmunikationsdienstleistungen zur Erweiterung des Leistungsangebots vorteilhaft gewerblich einsetzbar.

## Patentansprüche

1. Vorrichtung (1) zur Generierung und Verbreitung von individuellen Multimediabotschaften, insbesondere zur Aufstellung und zum Betrieb in öffentlichen oder halböffentlichen Bereichen, bestehend aus den folgenden Komponenten:
a) einer Datenverarbeitungsanlage (2) mit einem Speicher (6) zur Speicherung von vorbestimmten und/oder vom Benutzer eingegebenen Datensätzen, die Bildern, Bild-Sequenzen, Ton-Sequenzen, Textbotschaften oder Mischformen davon entsprechen, und zur Speicherung von Steuerungsprogrammen, sowie einem Prozessor (5) zur Steuerung der Ein- und Ausgabe vorbestimmter oder vom Benutzer eingegebener Daten, zur Steuerung von deren Speicherung, zur Steuerung der Gestaltung individueller Multimediabotschaften aus wenigstens einem gespeicherten Datensatz sowie zur Umwandlung der Multimediabotschaft in einen über ein Kommunikationsnetz (10) an eine vorgegebene Adresse übertragbaren Datensatz;
b) eine Kamera (3), ein Mikrofon (3') und eine Text-Eingabeeinheit (7), die Teil der Datenverarbeitungsanlage (2) oder über eine Schnittstelle mit der Datenverarbeitungsanlage (2) gekoppelt sind, zur Generierung benutzerbestimmter Bilder, Bild-Sequenzen, Ton-Sequenzen, Textbotschaften oder Mischformen davon sowie zur Eingabe einer Adresse;
c) ein Bildschirm (8) und ein Lautsprecher (8'), die Teil der Datenverarbeitungsanlage (2) oder über eine Schnittstelle mit der Datenverarbeitungsanlage (2) gekoppelt sind, zur Ausgabe vorbestimmter und/oder benutzerbestimmter Datensätze auf optischem und/oder akustischem Weg;
d) Steuerelemente (7) zur Bearbeitung wenigstens eines gespeicherten Datensatzes durch den Benutzer zur Generierung einer individuellen Multimediabotschaft;
e) einer Schnittstelle (9) der Datenverarbeitungsanlage (2), die den Zugang derselben zu einem Kommunikationsnetz (10) bildet;
f) einem Münz- und/oder Kartenautomaten (4), der mit der Datenverarbeitungsanlage gekoppelt ist, zur Bereitstellung eines Guthabens in Geldeinheiten;
g) Mittel zur Berechnung der Nutzungskosten und Abbuchung oder Einbehaltung dieser Kosten vom bereitgestellten Guthaben.

2. Vorrichtung nach Anspruch 1, dadurch gekennzeichnet,
daß das Kommunikationsnetz, über welches die Botschaft übertragen wird, wahlweise ein Telefonnetz, das Internet oder ein sonstiges Datennetzwerk ist und der Netzzugang mit einem Modem, einer ISDN-Schnittstelle oder über einen Internet-Service-Provider (ISP) hergestellt wird.

3. Vorrichtung nach Anspruch 1, dadurch gekennzeichnet,
daß sie die generierte Multimediabotschaft direkt an den Empfänger übermittelt und/oder sie in digitaler Form auf dauerhaften lokalen Speichermedien oder in der Domain eines ISP speichert und gegebenenfalls zu einem späteren Zeitpunkt automatisch einen Übertragungsversuch vornimmt.

4. Vorrichtung nach Anspruch 1, dadurch gekennzeichnet,
daß die Datenverarbeitungsanlage ein Standard-PC mit den üblichen Zubehörteilen Bildschirm, Maus oder Trackball oder berührungssensitiver Bildschirm und/oder Tastatur ist.

5. Vorrichtung nach Anspruch 1, dadurch gekennzeichnet,
daß Datenverarbeitungsanlage, Bildschirm, Lautsprecher, Text-Eingabeeinheit, die vorzugsweise ein berührungssensitiver Bildschirm oder eine Tastatur ist, Münz- bzw. Kartenautomat in eine Konsole integriert sind, welche freistehend aufstellbar ist oder sich innerhalb einer Kommunikationszelle befindet.

6. Vorrichtung nach Anspruch 5, dadurch gekennzeichnet,
daß die Kamera, ggf. auch das Mikrofon, auf einem Stativ beweglich montiert ist, welches relativ zur Konsole fest positioniert ist.

7. Verfahren zur Generierung und Verbreitung von individuellen Multimediabotschaften, insbesondere unter Verwendung einer Vorrichtung nach einem der Ansprüche 1 bis 6, mit folgenden Schritten:
a) Ein Guthaben in Geldeinheiten wird in Form von Bargeld und/oder Guthabenkarten und/oder Kreditkarten durch den Benutzer bereitgestellt;
b) das zugeführte Guthaben wird registriert, bewertet und angezeigt oder der Benutzer zur Eingabe eines Berechtigungsnachweises aufgefordert;
c) es werden Mittel zur Generierung benutzerbestimmter Bilder, Bild-Sequenzen, Ton-Sequenzen, Textbotschaften oder Mischformen davon in Betriebsbereitschaft versetzt;
d) individuelle Bilder, Bild-Sequenzen und/oder Ton-Sequenzen werden, gesteuert durch den Benutzter, aufgezeichnet und/oder Textbotschaften vom Benutzer erstellt und diese Daten jeweils in digitaler Form gespeichert;
e) die benutzerbestimmten Daten werden unter einer graphischen Benutzeroberfläche interaktiv bearbeitet, wobei die benutzerbestimmten Daten untereinander und/oder mit vorbestimmten Daten kombiniert werden, zum Erstellen einer individuellen Multimediabotschaft, welche in digitaler Form gespeichert wird;
f) die Multimediabotschaft wird in einen über ein Kommunikationsnetz an eine vorgegebene Adresse übertragbaren Datensatz umgewandelt;
g) Nutzungsgebühren werden berechnet, der entsprechende Geldbetrag vom zugeführten Guthaben abgebucht bzw. die Kreditkarte belastet, das Restguthaben und eventuelle Karten werden zurückgegeben;
h) der Datensatz wird an die vorgegebene Adresse bzw. die vorgegebenen Adressen übertragen.

8. Verfahren nach Anspruch 7, dadurch gekennzeichnet,
daß der Benutzer zur Auswahl eines Kommunikationsnetzes wie Telefonnetz oder Internet sowie zur Eingabe einer oder mehrerer Adressen von Adressaten der Multimediabotschaft aufgefordert wird und daß die Übertragung der Multimediabotschaft diesen Vorgaben entsprechend vorgenommen wird.

9. Verfahren nach Anspruch 7 oder 8, dadurch gekennzeichnet,
daß die Multimediabotschaft zwischengespeichert wird, bis sie erfolgreich an alle Adressaten übertragen wurde, wobei gegebenenfalls die Übertragung wiederholt wird, und danach automatisch gelöscht wird.
